# EUROPÄISCHE PATENTSCHRIFT

(11) **EP 3 346 845 B1**
(45) Veröffentlichungstag und Bekanntmachung des Hinweises auf die Patenterteilung: **22.05.2019**
(21) Anmeldenummer: 16760083.2
(22) Anmeldetag: 02.09.2016
(51) Int. Cl.: A21C 5/04, A21C 14/00

(54) **TEIGBEARBEITUNGSMASCHINE**
DOUGH PROCESSING MACHINE
DIVISEUSE DE BOULANGERIE

(30) Priorität: 08.09.2015 DE 102015217117
(43) Veröffentlichungstag der Anmeldung: 18.07.2018
(73) Patentinhaber: WP Kemper GmbH, 33397 Rietberg (DE)
(72) Erfinder: LAZIS, Jan, 33605 Bielefeld (DE)
(74) Vertreter: Rau, Schneck & Hübner Patentanwälte Rechtsanwälte PartGmbB
(86) Internationale Anmeldenummer: PCT/EP2016/070771
(87) Internationale Veröffentlichungsnummer: WO 2017/042106

(56) Entgegenhaltungen:
- EP-A1- 2 901 860
- DE-A1-102012 216 076
- US-A- 3 905 326
- US-A- 4 057 377
- US-B1- 6 322 345

## Beschreibung

Die Erfindung betrifft eine Teigbearbeitungsmaschine, insbesondere zum Produzieren gewirkter Teiglinge aus einem Rohteig.

Eine derartige Teigbearbeitungsmaschine ist beispielsweise bekannt aus der DE 10 2012 216 076 A1. Die DE 10 2006 046 501 A1 offenbart eine Vorrichtung zur Herstellung eines Teigbandes aus einem Roh-Teigband sowie ein Set aus Planetenwalzen zum Einsatz in einer derartigen Vorrichtung. Die DE 10 2014 201 518 A1 sowie die EP 2 901 860 A1 offenbaren eine Teigteilmaschine. Die US 6,322,345 B1 offenbart eine Vorrichtung zum Extrudieren von Teig. Die US 3,905,326 A1 offenbart eine Vorrichtung sowie ein Verfahren zum Verteilen von Garnierung auf Nahrungsmitteln.

Es ist eine Aufgabe der vorliegenden Erfindung, eine Teigbearbeitungsmaschine der eingangs genannten Art derart weiterzubilden, dass deren Reinigung vereinfacht ist.

Diese Aufgabe ist erfindungsgemäß gelöst durch eine Teigbearbeitungsmaschine mit den im Anspruch 1 angegebenen Merkmalen.

Eine zwischen einer Betriebsstellung und einer Reinigungsstellung verlagerbare Teigkammer vereinfacht deren Zugänglichkeit und damit deren Reinigung. Die Teig-Zuführeinheit kann als Teig-Zuführtrichter ausgeführt sein. Die Teigkammer kann austauschbar gestaltet sein. Die Teigkammer ist über eine Schwenklagerung an einer Rahmenkomponente der Teigbearbeitungsmaschine gelagert. Eine derartige Schwenklagerung der Teigkammer stellt eine besonders einfache Möglichkeit zur geführten Verlagerung der Teigkammer dar. Die Schwenklagerung kann direkt an der Montageplatte oder über eine hiervon separate Rahmenkomponente angebracht sein.

Eine Justageeinheit nach Anspruch 3 kann durch mindestens einen Positionieranschlag gebildet sein. Die Justageeinheit kann als Nut/Federführung ausgeführt sein. Die Teigkammer kann in der Betriebsstellung positioniert gesichert sein. Eine derartige Sicherung der Teigkammer in der Betriebsstellung kann über einen Kraftspanner erfolgen. Die Sicherung kann gesteuert über eine zentrale Steuereinrichtung der Teigbearbeitungsmaschine erfolgen.

Ein verlagerbares Mundstück nach Anspruch 4 führt zu einer zusätzlichen Verbesserung der Zugänglichkeit der Teigkammer für die Reinigung. Auch das Mundstück kann dann besser gereinigt werden.

Eine Schwenklagerung nach Anspruch 5 führt zur Möglichkeit, das Mundstück abklappbar zu gestalten. Dies vereinfacht einerseits eine Verlagerung des Mundstücks zur Teigkammer und andererseits eine Zugänglichkeit dieser Komponenten für die Reinigung.

Ein weiterer Aspekt betrifft eine Teigbearbeitungsmaschine
- mit einem Gehäuse,
- mit einer Mehrzahl von angetriebenen Teig-Bearbeitungskomponenten,
- mit einer Mehrzahl von Antrieben, die mit den Teig-Bearbeitungskomponenten in mechanischer Antriebsverbindung stehen,
- mit einer Montageplatte, die einerseits die Teig-Bearbeitungskomponenten und anderseits die Antriebe trägt,
- wobei die Montageplatte so angeordnet ist, dass sie einen Innenraum des Gehäuses unterteilt
   -- in einen über einen gesamten Teig-Bearbeitungsweg frei zugänglichen Teig-Bearbeitungsraum, in dem die Teig-Bearbeitungskomponenten untergebracht sind, und
   -- in einen Antriebsraum, in dem die Antriebe untergebracht sind,
- wobei die Montageplatte vertikal stehend im Gehäuse angeordnet ist.

Bei einer derartigen Teigbearbeitungsmaschine wurde erkannt, dass eine konsequente Trennung der Maschinenkomponenten in Teig-Bearbeitungskomponenten einerseits und Antriebe andererseits dazu führt, dass der Teig einerseits und die Antriebe der Teig-Bearbeitungskomponenten andererseits einander nicht unerwünscht nahe kommen. Eine Kontamination des Teiges beispielsweise mit Schmiermitteln oder mit Abrieb der Antriebe ist hierdurch vermieden. Die Reinigung des Teig-Bearbeitungsraums einerseits und des Antriebsraums andererseits ist vereinfacht, da dort gezielt auf unterschiedliche Verunreinigungsquellen geachtet werden kann. Eine Antriebsverbindung zwischen den Antrieben im Antriebsraum und den Teig-Bearbeitungskomponenten im Teig-Bearbeitungsraum kann über Durchtrittsöffnungen in der Montageplatte erfolgen. Die Trennung des Gehäuse-Innenraums in den Teig-Bearbeitungsraum und den Antriebsraum ermöglicht zudem eine einfachere Wartung der Antriebe, die über den Antriebsraum einfach zugänglich sind. Die Teigbearbeitungsmaschine kann mehrreihig ausgeführt sein, kann also zumindest in einzelnen Bearbeitungsstufen mehrere Reihen von Teiglingen parallel bearbeiten. In einem solchen Fall kann die Teigbearbeitungsmaschine beispielsweise vierreihig, sechsreihig, achtreihig oder zehnreihig ausgeführt sein. Die Montageplatte kann insgesamt einteilig ausgeführt sein. Alternativ ist auch eine mehrteilige Montageplatte möglich. Die Montageplatte kann insgesamt als eine ebene Platte ausgeführt sein. Alternativ ist auch eine dreidimensionale Gestaltung der Montageplatte möglich. Der Teig-Bearbeitungsraum ist über den gesamten Teig-Bearbeitungsweg frei zugänglich. Der Teig-Bearbeitungsraum kann zu einer Bedienerseite hin eine transparente Abdeckung aufweisen, sodass neben der freien Zugänglichkeit auch eine Sichtkontrolle des Teig-Bearbeitungswegs gewährleistet ist. Die Teigbearbeitungsmaschine kann genau einen Teig-Bearbeitungsraum und genau einen Antriebsraum aufweisen, die über die Montageplatte voneinander getrennt sind. Die Montageplatte ist vertikal stehend im Gehäuse angeordnet. Eine solche Montageplatte hat sich als besonders vorteilhaft herausgestellt. Eine Anordnung mit vertikaler Montageplatte und hieran einerseits montierten Bearbeitungskomponenten ist auch als Balkonbauweise bekannt.

Die Teigbearbeitungsmaschine gemäß dieses weiteren Aspekts kann eine Auffangwanne aufweisen, die im Bodenbereich des Teig-Bearbeitungsraums angeordnet ist. Eine derartige Auffangwanne ermöglicht ein unkompliziertes Auffangen von im Teig-Bearbeitungsraum anfallenden Teigresten. Die Auffangwanne kann im Bodenbereich des Teig-Bearbeitungsraums einfach entfernbar und/oder austauschbar angeordnet sein. Dies erleichtert eine Entleerung der Auffangwanne.

Als Teig-Bearbeitungskomponenten einer derartigen Teigbearbeitungsmaschine können die drei nachfolgenden Teig-Bearbeitungskomponenten zum Einsatz kommen:
- eine Teigportioniereinrichtung,
- eine Teigdosiereinrichtung,
- eine Teigwirkeinrichtung.

Für einen derartigen Aufbau der Teigbearbeitungsmaschine mit Teig-Bearbeitungskomponenten hat sich das Konzept der Trennung des Gehäuse-Innenraums in den Teig-Bearbeitungsraum und den Antriebsraum als besonders geeignet herausgestellt. Die Teigbearbeitungsmaschine kann alternativ oder zusätzlich auch eine Schneideinrichtung zum Schneiden von Teig beinhalten. Auch andere Teig-Bearbeitungskomponenten, beispielsweise zum Stanzen, Stüpfeln oder Bestreuen von Teig können zum Einsatz kommen.

Blockungskörper nach Anspruch 10 ermöglichen es, eine N-reihig ausgeführte Teigbearbeitungsmaschine durch Einsatz von mindestens einem Blockungskörper oder einer Mehrzahl M von Blockungskörpern in eine N-1-reihige oder N-M-reihige Teigbearbeitungsmaschine ohne größeren Aufwand umzugestalten. Die Blockungskörper ermöglichen eine einfache Blockung einzelner Bearbeitungsreihen. Es kann mindestens eine randseitige Bearbeitungsreihe oder auch eine mittlere zwischen nicht geblockten Bearbeitungsreihen angeordnete Bearbeitungsreihe geblockt werden. Der mindestens eine Blockungskörper kann in das Mundstück in einen Teigdurchtrittskanal eingesetzt werden und entsprechend zu einer Aufnahme im Mundstück komplementär gestaltet sein. Der Einsatz derartiger Blockungskörper ist im Falle eines abklappbar gestalteten Mundstücks von besonderem Vorteil. Von Vorteil ist, wenn der mindestens eine Blockungsköper so eingesetzt ist, dass der Druck des geförderten Teigs den Blockungskörper in seine Aufnahme presst.

Die vorstehend erläuterten Merkmale beider Aspekte der Teigbearbeitungsmaschine können in beliebiger Kombination miteinander verbunden sein. Insbesondere kann die geführt verlagerbare Teigkammer auch bei einer Ausführung der Teigbearbeitungsmaschine mit durch eine Montageplatte unterteiltem Gehäuse-Innenraum vorhanden sein.

Ausführungsbeispiele der Erfindung werden nachfolgend anhand der Zeichnung näher erläutert. In dieser zeigen:
- Fig. 1: perspektivisch eine innere Details preisgebende Ansicht einer Teigbearbeitungsmaschine, die eine Mehrzahl angetriebener Teig-Bearbeitungskomponenten aufweist;
- Fig. 2: perspektivisch und im Vergleich zur Fig. 1 vergrößert eine Teigportioniereinrichtung der Teigbearbeitungsmaschine, die zur Vorbereitung einer nachfolgenden Teigbearbeitung in der Teigbearbeitungsmaschine dient;
- Fig. 3: eine Seitenansicht der Teigportioniereinrichtung aus Blickrichtung III in Fig. 2;
- Fig. 4: einen Schnitt gemäß Linie IV-IV in Fig. 3;
- Fig. 5: perspektivisch eine zentrale Montageplatte, gesehen von einem Teig-Bearbeitungsraum her einschließlich von der Montageplatte getragener Komponenten einer der Teigportioniereinrichtung nachgeordneten Teigdosiereinrichtung der Teigbearbeitungsmaschine;
- Fig. 6: in einer zur Fig. 5 ähnlichen Ansicht die gleichen Komponenten, abgesehen von einem entfernten Teig-Zuführkolben der Teigdosiereinrichtung;
- Fig. 7: in einer zu den Fig. 5 und 6 ähnlichen Darstellung die Komponenten nach Fig. 6, wobei zwei Kulissen-Tragplatten einer Kulissenführung zur Führung einer Verlagerung von Messkolben einer Messtrommel der Teigdosiereinrichtung aus einer Kulissenführungs-Betriebsstellung nach Fig. 6 in eine Kulissenführungs-Reinigungsstellung überführt sind;
- Fig. 8: in einer zu den Fig. 5 bis 7 ähnlichen Darstellung die Komponenten nach den Fig. 6 und 7, wobei eine Teigkammer der Teigdosiereinrichtung aus einer Betriebsstellung nach den Fig. 5 bis 7 in eine Reinigungsstellung ausgeschwenkt ist;
- Fig. 9: in einer zur Fig. 8 ähnlichen Darstellung die Komponenten nach den Fig. 6 bis 8, wobei ein Einlauftrichter der Teigdosiereinrichtung entfernt und ein Mundstück der Teigdosiereinrichtung von der Teigkammer abgeklappt ist;
- Fig. 10: in einer zu den Fig. 5 bis 9 ähnlichen Darstellung die Komponentenbaugruppe mit im Vergleich zur Fig. 9 entfernter Teigkammer einschließlich Mundstück sowie mit aus der Messtrommel herausgenommenen Messkolbenleisten einschließlich von diesen getragener Messkolben;
- Fig. 11: perspektivisch die Teigkammer der Teigdosiereinrichtung;
- Fig. 12: perspektivisch das Mundstück;
- Fig. 13: perspektivisch einen Abschnitt einer der Messkolbenleisten;
- Fig. 14: in einer zur Fig. 4 ähnlichen Darstellung eine weitere Ausführung einer Teigportioniereinrichtung;
- Fig. 15: in einer zu Fig. 12 ähnlichen Ansicht das Mundstück mit zwei eingesetzten Blockungskörpern, die zwei der insgesamt sechs Bearbeitungsreihen der Teigdosiereinrichtung blocken; und
- Fig. 16: das Mundstück nach Fig. 15, gesehen aus Blickrichtung XVI in Fig. 15.

Eine Teigbearbeitungsmaschine 1 dient zur Herstellung einer Mehrzahl exakt dosierter und rundgewirkter Teiglinge, die beispielsweise nachfolgend zu Brötchen verarbeitet werden können. Die Teigbearbeitungsmaschine 1 ist sechsreihig ausgeführt.

Die Teigbearbeitungsmaschine 1 hat ein im Wesentlichen quaderförmiges Gehäuse 2 mit einem Gehäuserahmen 3. Ein Gehäuseboden 4 hat oberhalb eines Maschinenbodens eine erhebliche Bodenfreiheit im Bereich einiger zehn Zentimeter.

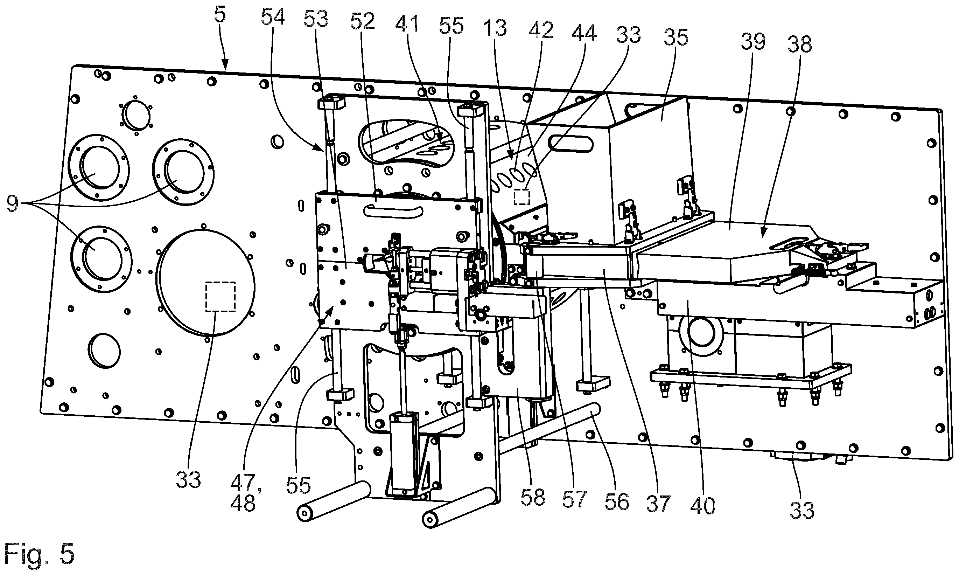

Die Teigbearbeitungsmaschine 1 hat eine Mehrzahl angetriebener Teig-Bearbeitungskomponenten, die nachfolgend noch beschrieben werden. Weiterhin hat die Teigbearbeitungsmaschine 1 eine Mehrzahl von Antrieben, die mit diesen Teig-Bearbeitungskomponenten in mechanischer Antriebsverbindung stehen und die nachfolgend ebenfalls noch beschrieben werden. Eine zentrale Montageplatte 5, die insbesondere in den Fig. 5 bis 10 dargestellt ist, trägt einerseits, also zur einen Seite der Platte hin, die Teig-Bearbeitungskomponenten, also diejenigen Komponenten, die mit dem Teig in Berührung stehen, und andererseits, also zur anderen Plattenseite hin, die Antriebe für diese Teig-Bearbeitungskomponenten.

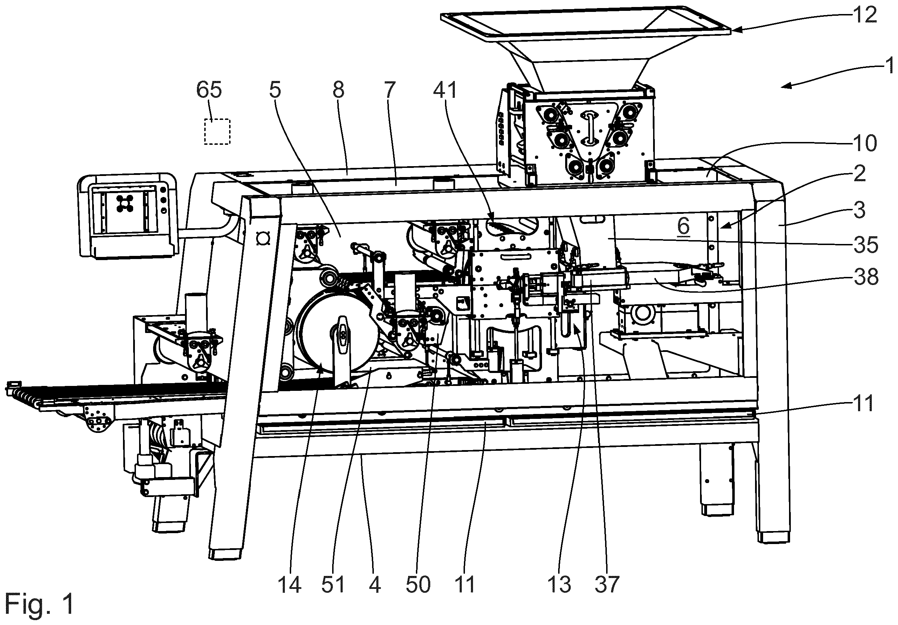

Die Montageplatte 5 ist so angeordnet, dass sie einen Innenraum 6 des Gehäuses 2 unterteilt in einen Teig-Bearbeitungsraum 7, in dem die Teig-Bearbeitungskomponenten untergebracht sind, und in einen Antriebsraum 8, in dem die Antriebe untergebracht sind. Antriebsverbindungen zwischen dem Teig-Bearbeitungsraum 7, der in den Fig. 1 sowie 5 bis 10 dem Betrachter zugewandt ist, und dem Antriebsraum 8 verlaufen durch Durchtrittsöffnungen 9 (vgl. z. B. Fig. 5) in der Montageplatte 5.

Auf dem Gehäuseboden 4 liegen insgesamt vier Auffangwannen 11 auf, von denen in der Fig. 1 zwei Auffangwannen 11 randseitig sichtbar sind. Die vier Auffangwannen 11 sind miteinander lösbar verbunden. Die Auffangwannen 11 sind von der Seite des Teig-Bearbeitungsraums 7 her von außen her zugänglich und können zur Entleerung aus dem Gehäuse 2 entnommen werden. Die Auffangwannen 11 dienen zum Auffangen von Teigresten, die bei der Teigbearbeitung im Teig-Bearbeitungsraum 7 anfallen.

Die Teigbearbeitungsmaschine 1 hat folgende Teig-Bearbeitungskomponenten:
- eine Teigportioniereinrichtung 12 zur Portionierung von Teig für eine nachfolgende Teigbearbeitung. Die Teigportioniereinrichtung 12 wird auch als Vorportionierer bezeichnet.
- eine Teigdosiereinrichtung 13 (vgl. auch Fig. 5) zur Vorgabe jeweils eines genau dosierten Volumens der Teiglinge.
- eine Teigwirkeinrichtung 14 zum Rundwirken der dosierten Teiglinge.

Die Montageplatte 5 ist vertikal stehend im Gehäuse 2 zwischen dem Gehäuseboden 4 und einem oberen Gehäusedeckel 10 angeordnet. Die tragenden Verbindungen der Teig-Bearbeitungskomponenten 13 und 14 einerseits und der zugeordneten Antriebe andererseits an der Montageplatte 5 sind in Balkonbauweise ausgeführt.

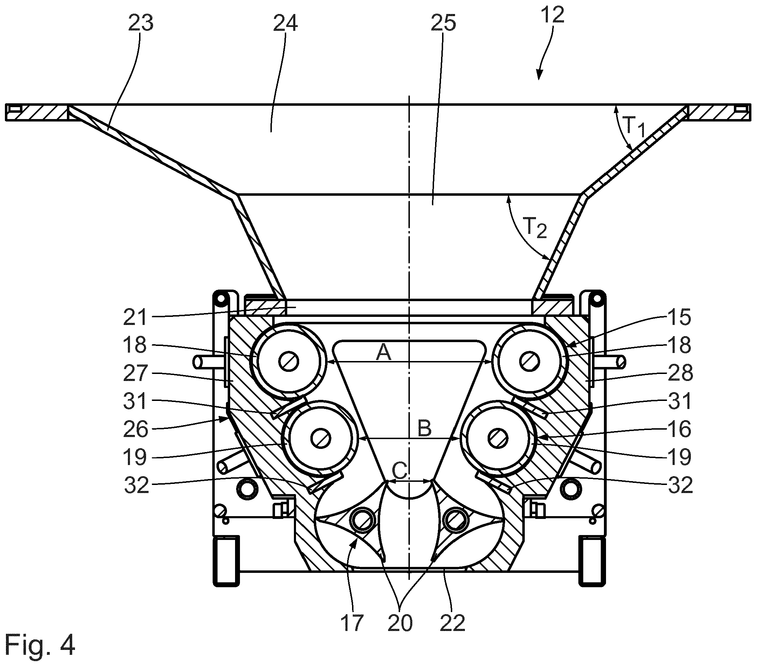

Die Teigportioniereinrichtung 12 hat eine Mehrzahl von Walzenpaaren, im dargestellten Ausführungsbeispiel genau drei Walzenpaare 15, 16 und 17 mit jeweils zwei Walzen 18, 19 und 20. Zwischen den jeweils um eine horizontale Drehachse antreibbaren Walzen 18, 19, 20 jedes Walzenpaares 15, 16, 17 ist jeweils ein horizontal verlaufender Teig-Förderspalt A, B und C angeordnet (vgl. Fig. 4). Hierbei gilt: A > B > C.

Die Walzenpaare 15 bis 17 sind zum Fördern des Teigs zwischen einer oberen Teig-Zugabeöffnung 21 und einer unteren Teig-Abgabeöffnung 22 ausgebildet. Auf die obere Teig-Zugabeöffnung 21 aufgesetzt ist ein Teig-Zugabetrichter 23. Dieser hat einen oberen Zugabeabschnitt 24 mit erstem Trichterwinkel T₁ und einen sich hieran anschließenden unteren Zugabeabschnitt 25 mit zweitem Trichterwinkel T₂. Es gilt: T₂ > T₁. Der untere Zugabeabschnitt 25 hat also steiler verlaufende Trichterwände als der obere Zugabeabschnitt 24.

Die Walzenpaare 15 bis 17 sind von einem Gehäuse 26 der Teigportioniereinrichtung 12 aufgenommen. Das Gehäuse 26 ist so ausgeführt, dass die Komponenten der Teigportioniereinrichtung 12 zwischen der Teig-Zugabeöffnung 21 und der Teig-Abgabeöffnung 22 umschlossen sind.

Damit die Walzen 18 bis 20 den Teig zur Förderung hin zur Teig-Abgabeöffnung 22 gut mitnehmen können, sind Oberflächen der Walzenmäntel der Walzen 18 bis 20 entsprechend bearbeitet, zum Beispiel glasperlgestrahlt.

Das Gehäuse 26 ist insgesamt aus Kunststoff ausgeführt, nämlich aus dem Polymermaterial POM (Polyoxymethylen).

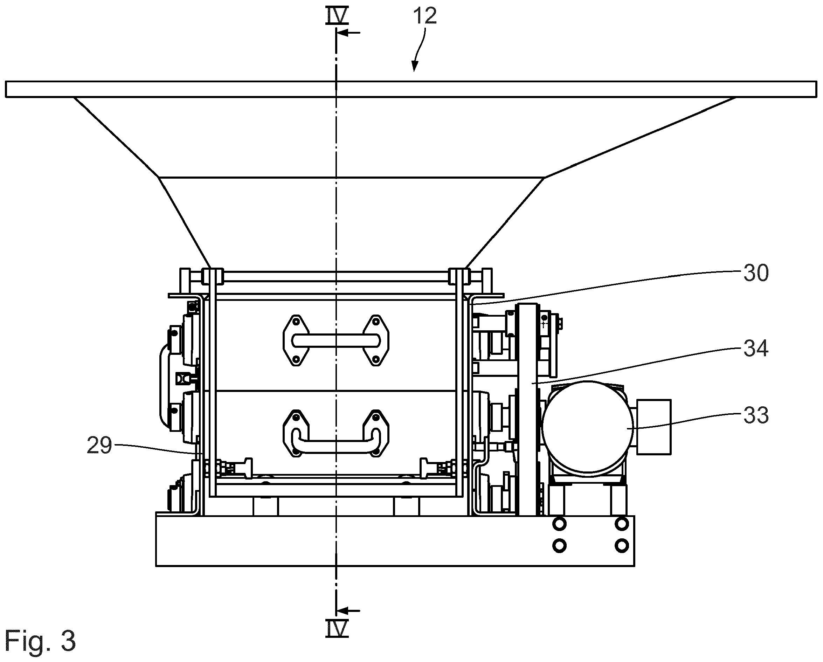

Das Gehäuse 26 ist mehrteilig ausgeführt und hat zwei Gehäuse-Seitenteile 27, 28 aus POM und zwei gegenüberliegende Gehäuse-Stirnwände 29, 30 (vgl. Fig. 3), in denen die Walzen 18, 19, 20 endseitig gelagert sind. Die Gehäuse-Stirnwände 29, 30 sind aus POM.

Die Gehäuse-Seitenteile 27, 28 sind jeweils einstückig ausgeführt. Die Gehäuse-Seitenteile 27, 28 haben jeweils drei hohlzylindrische Ausnehmungen, die komplementär zu den hierin laufenden Mantelwandabschnitten der Walzen 18 bis 20 mit größtem Radius zur jeweiligen Walzen-Drehwalze ausgeführt sind.

Die Gehäuse-Seitenteile 27, 28 haben jeweils zwei Aufnahmen für Teigschaber 31, 32. Die beiden oberen Teigschaber 31, die in die zugehörigen Aufnahmen der beiden Gehäuse-Seitenteile 27, 28 eingesetzt sind, wirken mit den Walzen 18 des obersten Walzenpaars 15 zusammen. Die Aufnahmen für die beiden oberen Teigschaber 31 sind in den Gehäuse-Seitenteilen 27, 28 zwischen den Walzen 18, 19 der Walzenpaare 15, 16 angeordnet. Die beiden weiteren, unteren Teigschaber 32 sind in den Gehäuse-Seitenteilen 27, 28 zwischen den Walzen 19, 20 der Walzenpaare 16, 17 angeordnet und wirken mit den Walzen 19 des mittleren Walzenpaars 16 zusammen.

Alle Walzen 18 bis 20 der Walzenpaare 15 bis 17 sind über einen gemeinsamen Antriebsmotor 33 angetrieben. Als Übertragungsglied dieses gemeinsamen Antriebs dient ein Zahnriemen 34. Über jeweils den Walzen 18 bis 20 zugeordnete Getriebe können den Walzen 18 bis 20 der verschiedenen Walzenpaare 15 bis 17 verschiedene Umdrehungsgeschwindigkeiten vorgegeben werden. Ziel hierbei ist die Erreichung eines möglichst kontinuierlichen Teigflusses. Die Umdrehungsgeschwindigkeit der Walzen 20 des untersten Walzenpaars 17 ist dabei höher als die Umdrehungsgeschwindigkeit der Walzen 19 des mittleren Walzenpaars 16, die wiederum höher ist als die Umdrehungsgeschwindigkeit der Walzen 18 des obersten Walzenpaars 15.

Der Antriebsmotor 33 ist oberhalb des Antriebsraums 8 angeordnet, also ebenfalls auf der antriebsseitigen Seite der Montageplatte 5.

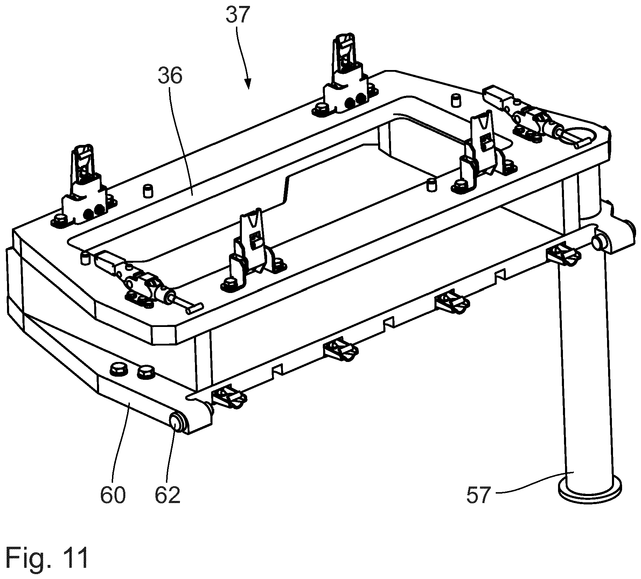

Das unterste Walzenpaar 17 ist mit zwei jeweils dreiflügligen Sternwalzen 20 ausgeführt. Die Sternwalzen 20 erzeugen vorportionierte Teigstücke, die der nachfolgenden Teigdosiereinrichtung 13 zugeführt werden. Die vorportionierten Teigstücke fallen durch die Teig-Abgabeöffnung 22 in einen darunter liegenden Einlauftrichter 35 der Teigdosiereinrichtung 13. Von dort fallen sie durch eine obere Kammeröffnung 36 (vgl. Fig. 11) in eine Teigkammer 37.

Der Einlauftrichter 35 stellt eine Teig-Zuführeinheit der Teigdosiereinrichtung 13 dar.

Zur Teigdosiereinrichtung 13 gehört weiterhin ein Teig-Zuführkolben 38 mit einem quaderförmigen Kolbenabschnitt 39. Der Kolbenabschnitt 39 ist komplementär zur Teigkammer 37 ausgeführt. Der Teig-Zuführkolben 38 wird über eine Linearführung 40 längs seines horizontalen Kolbenhubs geführt. Angetrieben ist der Teig-Zuführkolben über einen Servoantrieb, der im Antriebsraum 8 des Gehäuses 2 angeordnet ist.

Der Teig-Zuführkolben 38 ist in der Fig. 5 in einer maximal zurückgezogenen Kolbenposition dargestellt, die eine Reinigungsposition des Teig-Zuführkolbens 38 darstellt.

Weiterhin hat die Teigdosiereinrichtung 13 eine Messtrommel 41 mit einer Mehrzahl von Messkammern 42.

Entsprechend der sechsreihigen Ausführung der Teigbearbeitungsmaschine 1 hat die Messtrommel 41 in Umfangsrichtung gleich verteilt insgesamt acht Kammersätze zu je sechs nebeneinander liegenden Messkammern 42. Ein Antrieb der Messtrommel 41 um deren zentrale, horizontale Trommelachse erfolgt über einen Messtrommel-Antriebsmotor, der im Antriebsraum 8 untergebracht ist.

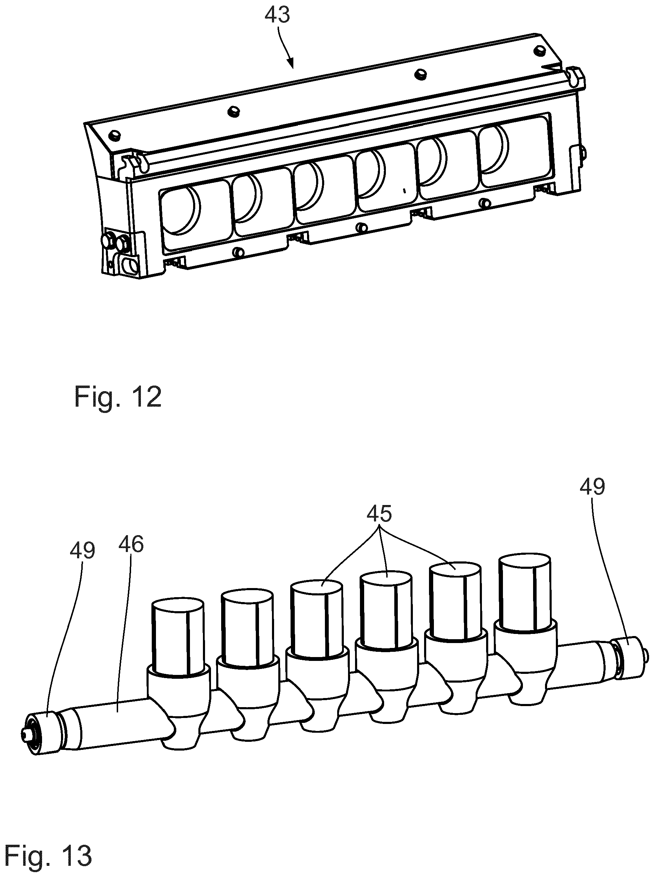

Im Teigförderweg zwischen der Teigkammer 37 und der Messtrommel 41 ist ein Mundstück 43 (vgl. auch Fig. 12) angeordnet. Ein Grundkörper 43a des Mundstücks 43, in dem sechs Teigdurchtrittskanäle aufgeführt sind, ist aus PETP (Polyethylenterephthalat) gefertigt. Ein auf dem Grundkörper 43a aufgesetzter Anlagekörper 43b des Mundstücks 43 ist aus einem anderen Kunststoff, nämlich aus PTFE (Polytetrafluorethylen) gefertigt. Das Mundstück 43 liegt im Bereich des Anlagekörpers 43b spielfrei an einer äußeren Mantelwand 44 der Messtrommel 41 an. Ein unerwünschter lateraler Teigaustritt zwischen dem Mundstück 43 und der Messtrommel 41 bzw. zwischen dem Mundstück 43 und der Teigkammer 37 ist hierdurch vermieden. Das Mundstück 43 kann als Teil der Teigkammer 37 verstanden werden.

Zur Teigdosiereinrichtung 13 gehört weiterhin eine Mehrzahl von Messkolben 45. Kolbenabschnitte der Messkolben 45 sind einteilig aus Kunststoff. Jeweils genau einer der Messkolben 45 ist genau einer der Messkammern 42 zur Vorgabe eines Messkammervolumens für die Teigdosierung zugeordnet. Jeweils sechs nebeneinander liegende Messkolben 45 bilden einen Messkolbensatz, der einem der Kammersätze der Messkammern 42 zugeordnet ist. Die sechs Messkolben 45 jedes Kolbensatzes werden von einer Messkolbenleiste 46 (vgl. auch Fig. 13) getragen, die radial innerhalb der Messtrommel 41 angeordnet sind.

Die Messkolben 45 sind gesteuert verlagerbar zwischen einer zurückgezogenen Messstellung, in der die Messkolben 45 das Messkolbenvolumen zur Teigdosierung vorgeben, und einer radial ausgefahrenen Übergabestellung zur Übergabe des im Messkolbenvolumen dosierten Teigvolumens an die nachgeordnete Teig-Bearbeitungskomponente, nämlich an die Teigwirkeinrichtung 14. Zu dieser gesteuerten Verlagerung der Messkolben 45 dient eine Kulissenführung 47 mit in der Zeichnung nicht sichtbaren Kurvensegmenten, die an Kulissen-Tragplatten 48 montiert sind und die auch als Kulissenelemente bezeichnet sind.

Eine dieser beiden Kulissen-Tragplatten 48 ist in den Figuren 1 sowie 5 bis 10 dem Betrachter zugewandt und zwischen der Messtrommel 41 und dem Betrachter angeordnet. Die Kulissenabschnitte dieser sichtbaren Kulissen-Tragplatte 48 sind an der dem Betrachter abgewandten Seite der Kulissen-Tragplatte angeordnet. Die andere, nicht sichtbare Kulissen-Tragplatte 48 ist im Bereich der Montageplatte 5 an der dem Betrachter abgewandten Stirnseite der Messtrommel 41 angeordnet und hat eine Anordnung von Kulissenabschnitten, die zur Anordnung der Kulissenabschnitte bei der sichtbaren Kulissen-Tragplatte 48 spiegelsymmetrisch ist. Die Kulissenabschnitte der Kulissen-Tragplatten 48 wirken mit endseitigen Laufrollen 49 (vgl. Fig. 13) der Messkolbenleisten 46 zusammen.

Zwischen einer in der Fig. 1 links dargestellten Übergabeseite der Messtrommel 41 und der Teigwirkeinrichtung 14 ist dem Teigförderweg der Teigbearbeitungsmaschine 1 eine Übergabeeinheit 50 angeordnet.

Ein Antrieb der Übergabeeinheit 50 erfolgt über mindestens einen Antriebsmotor, der im Antriebsraum 8 des Gehäuses 2 untergebracht ist.

Ein Antrieb der Teigwirkeinrichtung 14 erfolgt über mehrere, nämlich über drei Antriebsmotoren, die im Antriebsraum 8 des Gehäuses 2 untergebracht sind.

Von der Teigwirkeinrichtung 14 werden die dann rundgewirkten Teiglinge über ein Förderband 51 einer weiteren Bearbeitung, insbesondere einem Gärprozess und einem Backofen zugeführt.

Der Teig-Bearbeitungsraum 7 ist über den gesamten Teig-Bearbeitungsweg der Teigbearbeitungsmaschine 1 von einer Bedienerseite her frei zugänglich, da keine Antriebe der Teigbearbeitungsmaschine im Weg sind. Zur Bedienerseite hin kann der Teig-Bearbeitungsraum 7 über eine transparente Abdeckung abgedeckt sein. Hierdurch ist der Teig-Bearbeitungsraum 7 frei von einem Bediener einsehbar. Dies kann zur Überwachung des Teig-Bearbeitungswegs genutzt werden.

Zum Reinigen der Teig-Bearbeitungskomponenten können diese durch Verlagerung bzw. Demontage von Einzelkomponenten in besonderer Weise zugänglich gemacht werden.

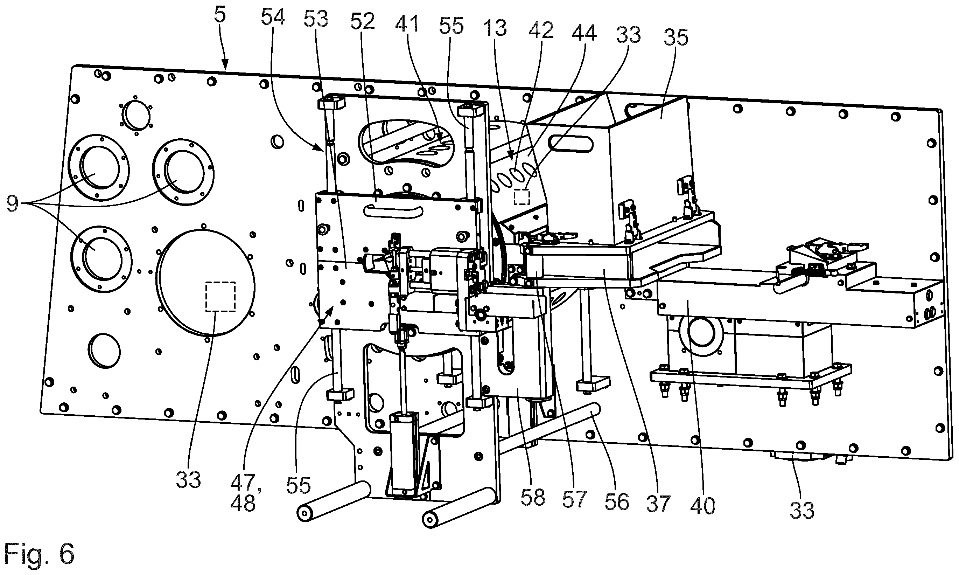

Dies wird nachfolgend insbesondere anhand der Fig. 6 bis 10 noch näher erläutert.

Fig. 6 zeigt die auch in der Fig. 5 dargestellte Baugruppe der Teigdosiereinrichtung 13 mit der Montageplatte 5, wobei der Teig-Zuführkolben 38 von der Linearführung 40 abgenommen ist. Die zugänglichen Flächen der Linearführung 40 sind glatt und einfach reinigbar.

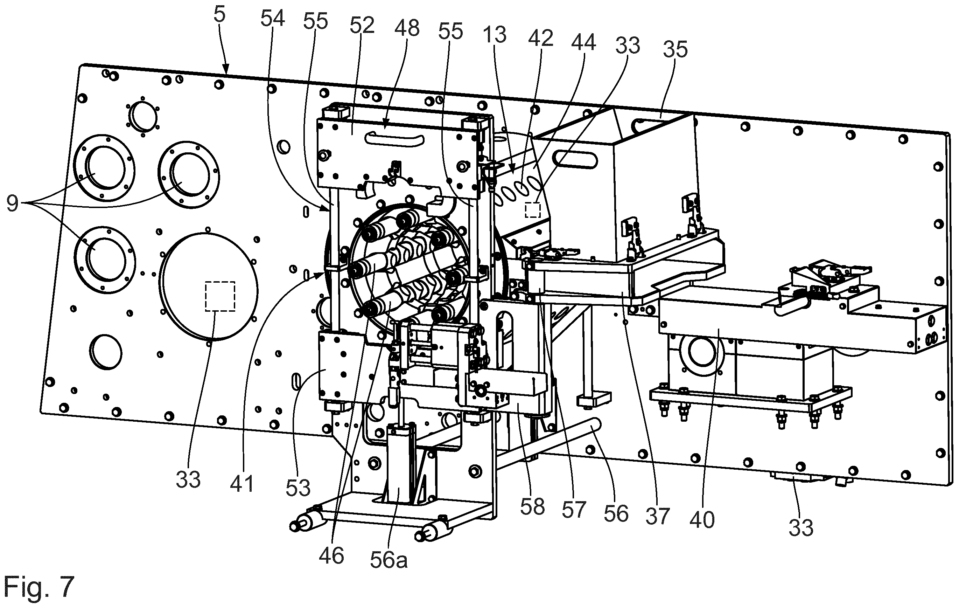

Fig. 7 zeigt die Baugruppe nach Fig. 6 nach Verlagerung der Kulissen-Tragplatte 48 von einer beispielsweise in den Fig. 5 und 6 gezeigten Betriebsstellung, in der die Kulissenabschnitte der Kulissen-Tragplatte 48 mit dem Messkolben 45 zumindest einer Messkolbenleiste 46 in Wirkverbindung stehen, in eine Reinigungsstellung. Die Kulissen-Tragplatte ist unterteilt in zwei Kulissen-Tragplattenabschnitte 52, 53. Eine vertikale Verlagerung dieser beiden Tragplattenabschnitte 52, 53 zwischen deren Betriebsstellung und deren Reinigungsstellung ist geführt über eine Linearführung 54 mit zwei vertikalen Führungsstangen 55, die fest über Auslegerstangen 56 an der Montageplatte 5 montiert sind.

In der Kulissenführungs-Reinigungsstellung der Kulissen-Tragplattenabschnitte 52, 53 können die Messkolbenleisten 46 und die Messkolben 45 aus der Messtrommel 41 entnommen werden.

Die Verlagerungsbewegung der Kulissentragplatte 48 zwischen der Betriebsstellung und der Reinigungsstellung kann motorisch angetrieben erfolgen, wobei der zugehörige Antriebsmotor dann wiederum im Antriebsraum 8 des Gehäuses 2 untergebracht ist. Alternativ kann eine solche Verlagerung auch manuell erfolgen. Bei der dargestellten Ausführung ist der untere Kulissen-Tragplattenabschnitt 53 über einen Antriebszylinder 56a verlagerbar. Der obere Kulissen-Tragplattenabschnitt 53 ist manuell verlagerbar .

Nach Entnahme der Messkolbenleisten 46 mit dem Messkolben 45 sind einerseits die Messkolbenleisten 46 mit den Messkolben 45 und andererseits ein Innenraum der Messtrommel 41 einer einfachen Reinigung zugänglich.

Die Ausgestaltung der Teigdosiereinrichtung 13 mit der zwischen der Betriebsstellung und der Reinigungsstellung verlagerbaren Kulissen-Tragplatte 48 kann derart sein, dass in der Kulissenführungs-Reinigungsstellung jeweils eine Messkolbenleiste 46 mit sämtlichen von dieser getragenen Messkolben 45 als Baueinheit aus der Messtrommel 41 entnehmbar ist.

Auch die Kulissen-Tragplatte 48 im Bereich der Montageplatte 5 kann entsprechend von einer Betriebsstellung in eine Reinigungsstellung verlagerbar sein. Diese Verlagerbarkeit ist dann motorisch über einen Motor angetrieben, der im Antriebsraum 8 untergebracht ist.

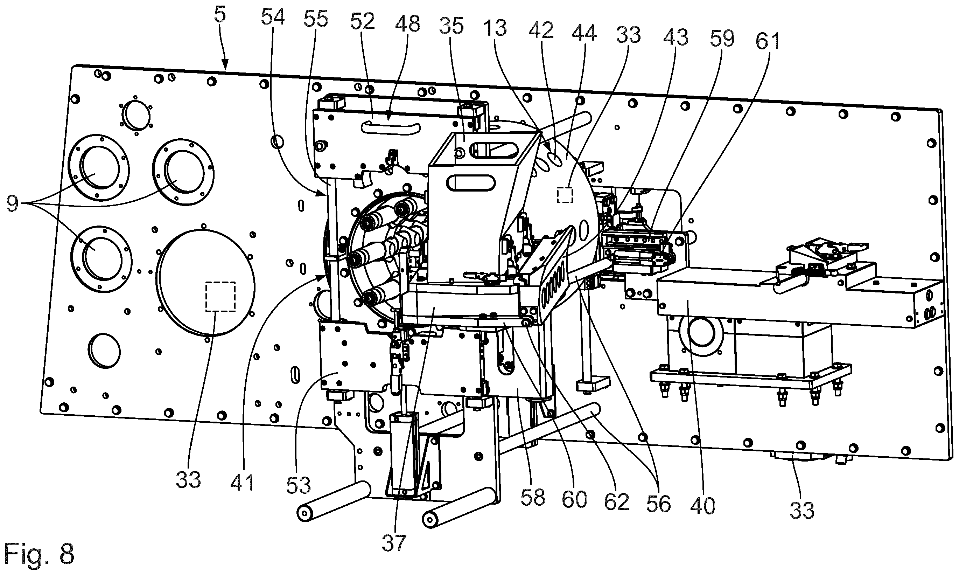

Fig. 8 zeigt die Teigkammer 37 einschließlich des Mundstücks 43 und des Einlauftrichters 35 aus der Betriebsstellung, die beispielsweise in der Fig. 5 gezeigt ist, verlagert in eine Reinigungsstellung. In dieser ist der Einlauftrichter 35 und eine in der Betriebstellung der Messtrommel 41 zugewandte Seite des Mundstücks 43 sowie eine der Montageplatte 5 zugewandte Seite der Teigkammer 37 der Reinigung zugänglich.

Geführt wird die Verlagerungsbewegung der Teigkammer 37 zwischen der Betriebsstellung beispielsweise nach Fig. 5, in der über die Teigkammer 37 der Teig mittels des Teig-Zuführkolbens 38 von dem Einlauftrichter 35 hin zur Messtrommel 41 gefördert wird, über ein Schwenklager 57 (vgl. Fig. 5) mit vertikaler Lagerachse. Das Schwenklager 57 ist getragen von einem Lagerbock 58, der wiederum über eine der Auslegerstangen 56 an der Montageplatte 5 montiert ist. Der Lagerbock 58 stellt eine Rahmenkomponente der Teigbearbeitungsmaschine 1 dar.

Zur justierten Positionierung der Teigkammer 37 in der Betriebsstellung dient eine Justageeinheit 59. Letztere ist als Nut/Federführung ausgeführt, wobei eine Nutkomponente der Justageeinheit 59 direkt auf der Grundplatte 5 montiert ist und mit einem Federvorsprung 60 der Teigkammer 37 zusammenwirkt. In der Betriebsstellung ist die Teigkammer 37 über einen Kraftspanner 61 gesichert, der über einen Kraftspannerantrieb angesteuert wird, der wiederum im Antriebsraum 8 des Gehäuses 2 untergebracht ist. Der Kraftspanner 61 ist direkt auf der Montageplatte 5 montiert.

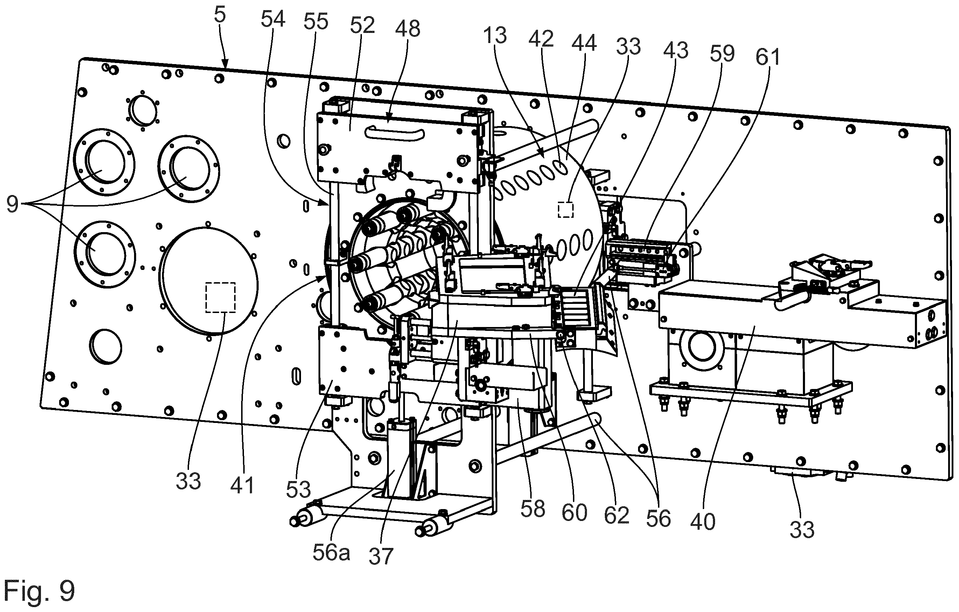

Fig. 9 zeigt eine weitere Stufe der Reinigungsstellung der Teigkammer 37, bei der das Mundstück 43 aus dessen Betriebsstellung in eine Reinigungsstellung verlagert ist, in der ein Inneres der Teigkammer 37 von außen her zugänglich ist. In der Reinigungsstellung ist auch das gesamte Mundstück 43 von allen Seiten her der Reinigung zugänglich.

Die Verlagerung des Mundstücks zwischen der Betriebsstellung und der Reinigungsstellung erfolgt geführt über ein Schwenklager 62 mit horizontaler Schwenkachse. Das Schwenklager 62 ist im Bereich einer Bodenplatte der Teigkammer 37 angeordnet. Ein kammerseitiger Lagerabschnitt des Schwenklagers 62 wirkt gleichzeitig als der Federvorsprung 60 für die Justageeinheit 59 zur Vorgabe der Betriebsstellung der Teigkammer 37.

In der Reinigungsstellung nach Fig. 9 ist der Einlauftrichter 35 von der Teigkammer 37 abgenommen.

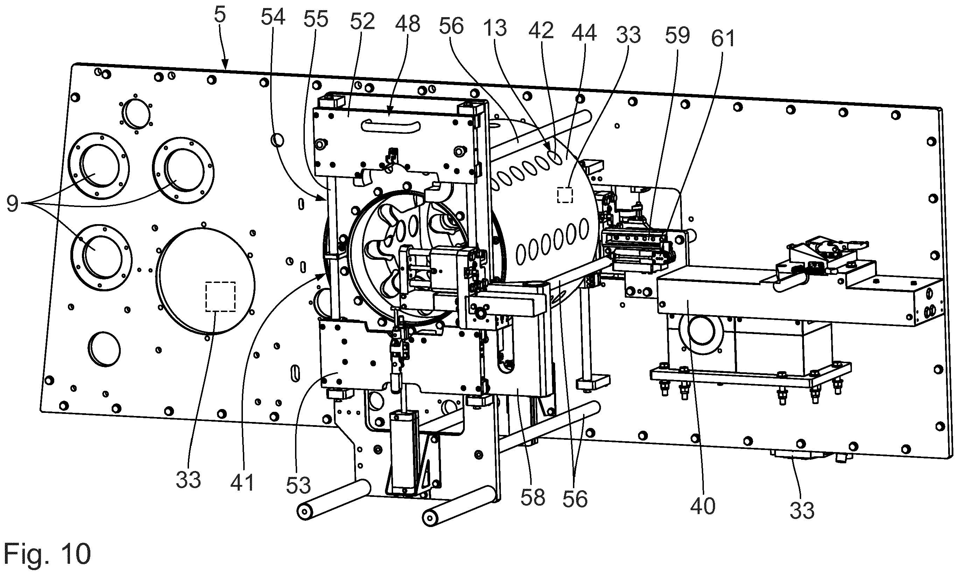

Fig. 10 zeigt die Teigdosiereinrichtung 13 nach Komplettdemontage der Teigkammer 37 vom Lagerbock 58 und nach Entfernung aller Messkolbenleisten 46 mit den Messkolben 45. Nun ist die gesamte Messtrommel 41 von außen und von innen her zu einer Grundreinigung zugänglich.
Bei einer solchen Grundreinigung der Teigbearbeitungsmaschine 1 kann folgendermaßen vorgegangen werden:

Zunächst wird eine äußere Gehäuseplatte des Gehäuses 2 abgenommen, so dass der Teig-Bearbeitungsraum 7 von außen her zugänglich ist. Diese äußere Gehäuseplatte kann als Schwenkhaube ausgeführt sein.

Anschließend wird zunächst der Teig-Zuführkolben 38 entfernt. Dann werden die Kulissen-Tragplattenabschnitte 52, 53 in die Reinigungsstellung überführt. Anschließend wird nach Lösen des Kraftspanners 61 die Teigkammer 37 einschließlich des Einlauftrichters 35 und des Mundstücks 43 in die Reinigungsstellung ausgeschwenkt und das Mundstück 43 in dessen Reinigungsstellung abgeklappt. Soweit erforderlich, wird die Teigkammer vom Lagerbock 58 gelöst.

Weiterhin werden die Messkolbenleisten 46 mit den Messkolben 45 aus der Messtrommel 41 entnommen.

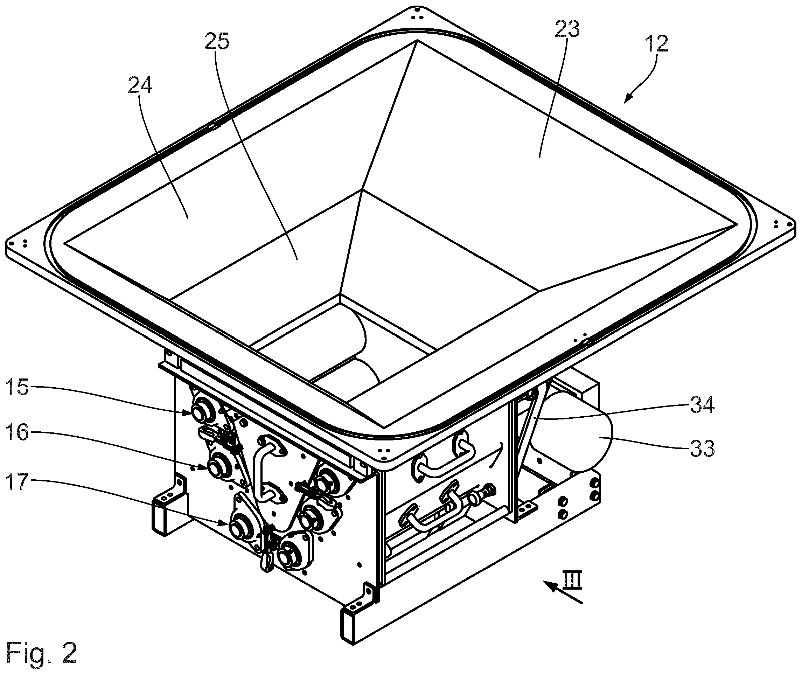

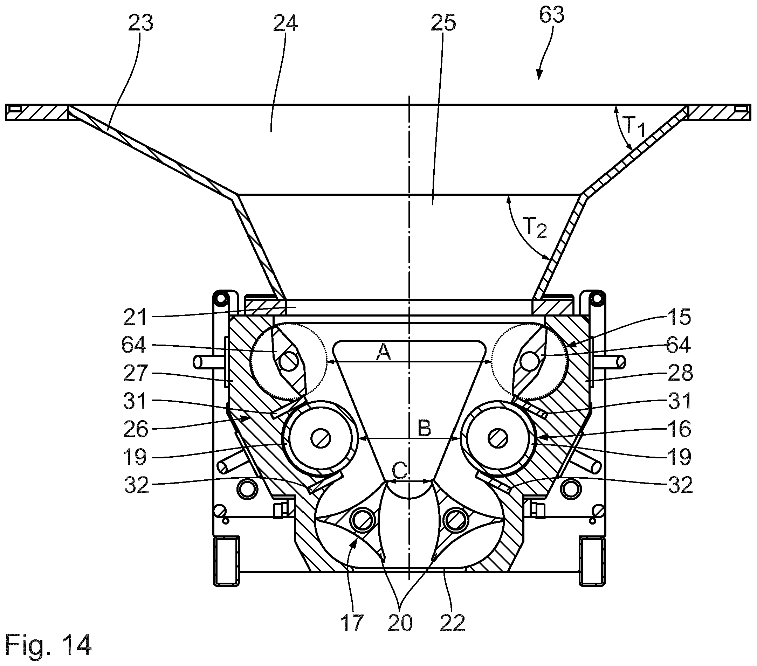

Fig. 14 zeigt eine weitere Variante einer Teigportioniereinrichtung 63, die anstelle der Teigportioniereinrichtung 12 bei der Teigbearbeitungsmaschine 1 zum Einsatz kommen kann. Komponenten, die denjenigen entsprechen, die vorstehend unter Bezugnahme insbesondere auf die Fig. 2 bis 4 bereits erläutert wurden, tragen die gleichen Bezugsziffern und werden nicht nochmals im Einzelnen diskutiert.

Anstelle runder Walzen 18 sind Walzen 64 des obersten Walzenpaars 15 als zweiflüglige Schaufelwalzen ausgeführt. Hierdurch kann ein hoher Teigdurchsatz der Teigportioniereinrichtung 63 erreicht werden.

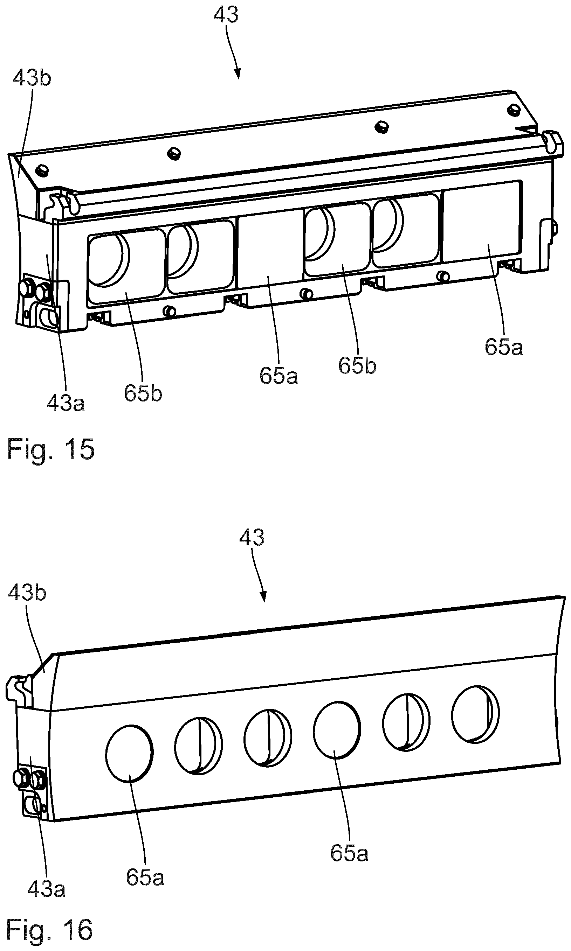

Die Figuren 15 und 16 zeigen eine Ausführung des Mundstücks 43, bei dem in dieses zwei Blockungskörper 65a eingesetzt sind. Die beiden Blockungskörper 65a blockieren die Teigdurchtrittskanäle einer in der Fig. 15 dritten Bearbeitungsreihe von links sowie einer in der Fig. 15 ganz rechten Bearbeitungsreihe der Teigdosiereinrichtung 13. Die Blockungskörper 65a sind so in entsprechende Aufnahmen 65b des Mundstücks 43 eingesetzt, dass die Blockungskörper 65a im Betrieb der Teigbearbeitungsmaschine 1 vom Teig in die zugehörigen Aufnahmen 65b gepresst werden.

Die Aufnahmen 65b sind nach dem Abklappen des Mundstücks 43 von der Teigkammer 37 von außen her durch die Bedienperson zum Einsetzen, Austauschen oder Entnehmen mindestens eines der Blockungskörper 65a einfach zugänglich.

Die Antriebe für die Teig-Bearbeitungskomponenten 12, 13 und 14 sind in der Fig. 5 bei 33 jeweils angedeutet.

Die Antriebe 33 sowie weitere steuerbare Komponenten, beispielsweise der Kraftspanner 61, werden über eine zentrale Steuereinrichtung 65 der Teigbearbeitungsmaschine 1 gesteuert, die in der Fig. 1 gestrichelt angedeutet ist. Die zentrale Steuereinrichtung 65 steht mit den anzusteuernden Komponenten in nicht dargestellter Weise in Signalverbindung.

## Patentansprüche

1. Teigbearbeitungsmaschine (1)
- mit einem Gehäuse (2),
- mit einer Teigdosiereinrichtung (13), die aufweist:
-- eine Teig-Zuführeinheit (35),
-- einen Teig-Zuführkolben (38),
-- eine Teigkammer (37),
-- eine Messtrommel (41) mit einer Mehrzahl von Messkammern (42),
**dadurch gekennzeichnet dass**
- die Teigkammer (37) geführt verlagerbar ist zwischen
-- einer Betriebsstellung, in der über die Teigkammer (37) Teig mittels des Teig-Zuführkolbens (38) von der Teig-Zuführeinheit (35) hin zur Messtrommel (41) gefördert wird,
-- einer Reinigungsstellung, in der ein Inneres der Teigkammer (37) von außen her zugänglich ist,
- mit einer Schwenklagerung (57) der Teigkammer (37) an einer Rahmenkomponente (58) der Teigbearbeitungsmaschine (1).

2. Teigbearbeitungsmaschine nach Anspruch 1, **dadurch gekennzeichnet, dass** die Schwenklagerung (57) über eine von einer Montageplatte (5) separate Rahmenkomponente (58) an der Montageplatte (5) angebracht ist.

3. Teigbearbeitungsmaschine nach Anspruch 1 oder 2, **gekennzeichnet durch** eine Justageeinheit (59) zur Positionierung der Teigkammer (37) in der Betriebsstellung.

4. Teigbearbeitungsmaschine nach einem der Ansprüche 1 bis 3, **dadurch gekennzeichnet, dass** die Teigkammer (37) ein Mundstück (43) aufweist, das verlagerbar ist zwischen
- einer Betriebsstellung, in der über das Mundstück (43) Teig von der Teigkammer (37) hin zu den Messkammern (42) der Messtrommel (41) gefördert wird,
- einer Reinigungsstellung, in der ein Inneres der Teigkammer (37) von außen her zugänglich ist.

5. Teigbearbeitungsmaschine nach Anspruch 4, **gekennzeichnet durch** eine Schwenklagerung (62) des Mundstücks (43) an der Teigkammer (37).

6. Teigbearbeitungsmaschine (1) nach einem der Ansprüche 1 bis 5, **gekennzeichnet durch**
- eine Mehrzahl von angetriebenen Teig-Bearbeitungskomponenten (12, 14),
- eine Mehrzahl von Antrieben (33), die mit den Teig-Bearbeitungskomponenten (12, 14) in mechanischer Antriebsverbindung stehen,
- eine Montageplatte (5), die einerseits die Teig-Bearbeitungskomponenten (12, 14) und anderseits die Antriebe (33) trägt,
- wobei die Montageplatte (5) so angeordnet ist, dass sie einen Innenraum (6) des Gehäuses (2) unterteilt
-- in einen über einen gesamten Teig-Bearbeitungsweg frei zugänglichen Teig-Bearbeitungsraum (7), in dem die Teig-Bearbeitungskomponenten (12, 14) untergebracht sind, und
-- in einen Antriebsraum (8), in dem die Antriebe (33) untergebracht sind,
- wobei die Montageplatte (5) vertikal stehend im Gehäuse (2) angeordnet ist.

7. Teigbearbeitungsmaschine nach Anspruch 6, **gekennzeichnet durch** eine Auffangwanne (11), die im Bodenbereich des Teig-Bearbeitungsraums (7) angeordnet ist.

8. Teigbearbeitungsmaschine nach Anspruch 6 oder 7, **dadurch gekennzeichnet, dass** die Auffangwanne (11) austauschbar im Bodenbereich des Teig-Bearbeitungsraums (7) angeordnet ist.

9. Teigbearbeitungsmaschine nach einem der Ansprüche 6 bis 8, **dadurch gekennzeichnet, dass** als Teig-Bearbeitungskomponenten die nachfolgenden Teig-Bearbeitungskomponenten zum Einsatz kommen:
- eine Teigportioniereinrichtung (12),
- eine Teigwirkeinrichtung (14).

10. Teigbearbeitungsmaschine nach einem der Ansprüche 1 bis 9, **gekennzeichnet durch** einen Satz Blockungskörper (65a) zur Blockung einzelner Bearbeitungsreihen der Teigbearbeitungsmaschine.

## Claims

1. Dough processing machine (1)
- with a housing (2),
- with a dough metering device (13) having
-- a dough feeding unit (35),
-- a dough feeding piston (38),
-- a dough chamber (37),
-- a measuring drum (41) with a plurality of measuring chambers (42),
**characterized in that**
- the dough chamber (37) is displaceable in a guided manner between
-- an operating position in which dough is conveyed, by means of the dough feeding piston (38), from the dough feeding unit (35) via the dough chamber (37) to the measuring drum (41),
-- a cleaning position in which an interior of the dough chamber (37) is accessible from outside,
- a pivotable mounting (57) of the dough chamber (37) to a frame component (58) of the dough processing machine (1).

2. Dough processing machine as claimed in claim 1, **characterized in that** the pivotable mounting (57) is attached to a mounting plate (5) via a frame component (58), which is separate from the mounting plate (5).

3. Dough processing machine as claimed in claim 1 or 2, **characterized by** an adjusting unit (59) to position the dough chamber (37) in the operating position.

4. Dough processing machine as claimed in any one of claims 1 to 3, **characterized in that** the dough chamber (37) has a mouthpiece (43), which is displaceable between
- an operating position in which dough from the dough chamber (37) is conveyed, via the mouthpiece (43), to the measuring chambers (42) of the measuring drum (41),
- a cleaning position in which an interior of the dough chamber (37) is accessible from outside.

5. Dough processing machine as claimed in claim 4, **characterized by** a pivotable mounting (62) of the mouthpiece (43) to the dough chamber (37).

6. Dough processing machine (1) as claimed in any one of claims 1 to 5, **characterized by**
- a plurality of driven dough processing components (12, 14),
- a plurality of drives (33), which are in a mechanical drive connection with the dough processing components (12, 14),
- a mounting plate (5), which carries the dough processing components (12, 14) on the one hand and the drives (33) on the other hand,
- wherein the mounting plate (5) is arranged such as to subdivide an interior (6) of the housing (2)
-- into a dough processing space (7), which houses the dough processing components (12, 14), and which is freely accessible over an entire dough processing path, and
-- into a drive space (8), which houses the drives (33),
- wherein the mounting plate (5) is arranged in the housing (2) in a vertically upright position.

7. Dough processing machine as claimed in claim 6, **characterized by** a collecting tray (11) arranged in the bottom area of the dough processing space (7).

8. Dough processing machine as claimed in claim 6 or 7, **characterized in that** the collecting tray (11) is arranged in the bottom area of the dough processing space (7) in such a way as to be replaceable.

9. Dough processing machine as claimed in any one of claims 6 to 8, **characterized in that** the following dough processing components are used as dough processing components:
- a dough portioning device (12),
- a dough kneading device (14).

10. Dough processing machine as claimed in any one of claims 1 to 9, **characterized by** a set of blocking bodies (65a) for blocking individual processing rows of the dough processing machine.

## Revendications

1. Machine de traitement de pâte (1)
- avec une caisse (2),
- avec un dispositif de dosage de pâte (13) présentant :
-- un dispositif d'alimentation de pâte (35),
-- un piston d'alimentation de pâte (38),
-- une chambre de pâte (37),
-- un tambour de dosage (41) avec une pluralité de chambres de dosage (42),
**caractérisée en ce que**
- la chambre de pâte (37) peut être déplacée de manière guidée entre
-- une position de service dans laquelle de la pâte est transportée par le biais d'un piston d'alimentation de pâte (38) à travers de la chambre de pâte (37) à partir du dispositif d'alimentation de pâte (35) vers le tambour de dosage (41),
-- une position de nettoyage, dans laquelle un intérieur de la chambre de pâte (37) est accessible de l'extérieur,
- avec un support pivotant (57) de la chambre de pâte (37) sur un élément de bâti (58) de la machine de traitement de pâte (1).

2. Machine de traitement de pâte selon la revendication 1, **caractérisée en ce que** le support pivotant (57) est attaché par un élément de bâti (58) séparé d'une plaque de montage (5) sur la plaque de montage (5).

3. Machine de traitement de pâte selon la revendication 1 ou 2, **caractérisée par** un dispositif d'ajustement (59) pour positionner la chambre de pâte (37) dans la position de service.

4. Machine de traitement de pâte selon une des revendications 1 à 3, **caractérisée en ce que** la chambre de pâte (37) présente un embout (43) qui est déplaçable entre
- une position de service, dans laquelle de la pâte est transporté à travers de l'embout (43) à partir de la chambre de pâte (37) vers les chambres de dosage (42) du tambour de dosage (41),
- une position de nettoyage, dans laquelle un intérieur de la chambre de pâte (37) est accessible de l'extérieur.

5. Machine de traitement de pâte selon la revendication 4, **caractérisée par** un support pivotant (62) de l'embout (43) sur la chambre de pâte (37).

6. Machine de traitement de pâte (1) selon une des revendications 1 à 5, **caractérisée par**
- une pluralité de composants de traitement de pâte (12, 14) entraînés,
- une pluralité d'entraînements (33) étant en liaison d'entraînement mécanique avec les composants de traitement de pâte (12, 14),
- une plaque de montage (5) supportant les composants de traitement de pâte (12, 14) d'un côté et les entraînements (33) de l'autre côté,
- la plaque de montage (5) est placée de telle manière qu'elle divise l'intérieur (6) de la caisse (2)
-- en une chambre de traitement de pâte (7), librement accessible à travers de la voie entière de traitement de pâte, où les composants de traitement de pâte (12, 14) sont logés, et
-- en une chambre d'entraînement (8) où les entraînements (33) sont logés,
- la plaque de montage (5) étant placée verticalement debout dans la caisse (2).

7. Machine de traitement de pâte selon la revendication 6, **caractérisée par** une cuve de réception (11) qui est placée dans la zone de fond de la chambre de traitement de pâte (7).

8. Machine de traitement de pâte selon la revendication 6 ou 7, **caractérisée en ce que** la cuve de réception (11) et placée de manière interchangeable dans la zone de fond de la chambre de traitement de pâte (7).

9. Machine de traitement de pâte selon une des revendications 6 à 8, **caractérisée en ce que** les composants de traitement de pâte employés sont les composants de traitement de pâte suivants :
- un dispositif pour diviser de la pâte en portions (12),
- un dispositif pour pétrir de la pâte (14).

10. Machine de traitement de pâte selon une des revendications 1 à 9, **caractérisée par** un set de corps de groupage (65a) pour grouper les files de traitement individuelles de la machine de traitement de pâte.
